# EUROPEAN PATENT SPECIFICATION

(11) **EP 4 527 705 B1**
(45) Date of publication and mention of the grant of the patent: **03.12.2025**
(21) Application number: 23206594.6
(22) Date of filing: 30.10.2023
(51) Int. Cl.: B60W 30/095, B60W 50/00, B60W 60/00, G06N 5/01, G06N 7/01, G06N 20/00

(54) **METHOD FOR DETERMINING VEHICLE DRIVING TRAJECTORY, COMPUTER DEVICE, STORAGE MEDIUM, AND VEHICLE**
VERFAHREN ZUR BESTIMMUNG DER FAHRTRAJEKTORIE EINES FAHRZEUGS, COMPUTERVORRICHTUNG, SPEICHERMEDIUM UND FAHRZEUG
PROCÉDÉ DE DÉTERMINATION DE TRAJECTOIRE DE CONDUITE DE VÉHICULE, DISPOSITIF INFORMATIQUE, SUPPORT D'INFORMATIONS ET VÉHICULE

(30) Priority: 20.09.2023 CN 202311218812
(43) Date of publication of application: 26.03.2025
(73) Proprietor: Anhui NIO Autonomous Driving Technology Co., Ltd., Hefei, Anhui 230601 (CN)
(72) Inventor: FAN, Haoyang, Hefei; Anhui Province, 230601 (CN); QIN, Hailong, Hefei, Anhui Province, 230601 (CN); REN, Shaoqing, Hefei, Anhui Province, 230601 (CN); ZHENG, Shaohua, Hefei; Anhui Province, 230601 (CN); SUN, Gang, Hefei, Anhui Province, 230601 (CN); FU, Xiaoxin, Hefei, Anhui Province, 230601 (CN)
(74) Representative: Vossius & Partner Patentanwälte Rechtsanwälte mbB

(56) References cited:
- EP-A1- 4 160 478
- WO-A1-2022/180237
- CN-A- 115 675 518
- US-A1- 2019 204 842

## Description

### Technical Field

The invention relates to the field of autonomous driving technologies, and specifically to a method for determining a vehicle driving trajectory, a computer device, a storage medium, and a vehicle.

### Background Art

When a vehicle is controlled for autonomous driving, generally, it is necessary to perceive a surrounding environment of the vehicle, plan a driving trajectory of the vehicle based on a result of environmental perception, and control the vehicle to drive autonomously according to the driving trajectory, to ensure the driving safety and reliability of the vehicle. The result of environmental perception includes but is not limited to information such as a road and traffic agents in the environment.

Currently, a conventional method for planning a vehicle driving trajectory is mainly predicting intentions of other traffic agents around a current vehicle according to preset rules, and then planning a driving trajectory of the current vehicle based on the intentions of the other traffic agents. However, such a method is not well suitable for strong interaction scenarios and long-tail interaction scenarios. For strong interaction scenarios, there is a need to plan a driving trajectory frequently in this scenario based on the intentions of other traffic agents, but an intention of each road agent at each of the plurality of future moments may not be accurately predicted based on preset rules, and consequently a reliable and safe driving trajectory cannot be planned. For long-tail interaction scenarios, since the long-tail interaction scenarios are mainly some less frequent or special scenarios, it may not be possible to preset rules for each long-tail interaction scenario. As a result, it may not be possible to obtain accurate intentions when predicting the intentions of the other traffic agents based on preset rules, and it is also impossible to plan a reliable and safe driving trajectory.

CN 115 675 518 A provides a trajectory planning method and device and electronic equipment. According to the specific implementation scheme, under the condition that interaction between a vehicle and a first obstacle is detected, a first state at a first moment and M first behavior combinations in a first time period are obtained; based on the first state and the M first behavior combinations, determining M second states at a second moment when the first time period ends; a first game tree is constructed based on the first state and M second states, the first state is the state of a first node of the first game tree, the second state is the state of a second node of the first game tree, and the second node is a child node of the first node; and when it is detected that interaction between the vehicle and the first obstacle is ended, planning a driving track of the vehicle based on the first game tree.

EP 4 160 478 A1 discloses a driving decision-making method and apparatus and a chip, to improve robustness of a driving decision-making policy and ensure an optimal output decision-making result. The method includes: building a Monte Carlo tree based on a current driving environment state, where the Monte Carlo tree includes a root node and N-1 non-root nodes, each node represents one driving environment state. The root node represents the current driving environment state, and a driving environment state represented by any non-root node is predicted by using a stochastic model of driving environments based on a driving environment state represented by a parent node of the non-root node and based on a driving action determined by the parent node of the non-root node in a process of obtaining the non-root node through expansion.

WO 2022/180237 A1 discloses a method of predicting actions of one or more actor agent in a scenario. A plurality of agent models are used to generate a set of candidate futures, each candidate future providing an expected action of the actor agent. A weighting function is applied to each candidate future to indicate its relevance in the scenario. A group of candidate futures is selected for each actor agent based on the indicated relevance, the plurality of agent models comprises a first model representing a rational goal directed behavior inferable from the vehicular scene, and at least one second model representing an alternate behavior not inferable from the vehicular scene.

US 2019/0204842 A1 discloses a vehicle, system and method of autonomous navigation of the vehicle. A reference trajectory for navigating a training traffic scenario along a road section is received at a processor of the vehicle. The processor determines a coefficient for a cost function associated with a candidate trajectory that simulates the reference trajectory. The determined coefficient is provided to a neural network to train the neural network. The trained neural network generates a navigation trajectory for navigating the vehicle using a cost coefficient determined by the neural network. The vehicle is navigated along the road section using the navigation trajectory.

Accordingly, there is a need for a new technical solution in the field to solve the problem described above.

### Summary

To overcome the above defects, the invention is proposed to provide a method for determining a vehicle driving trajectory, a computer device, a storage medium, and a vehicle, to solve or at least partially solve the technical problem of how to improve the reliability and safety in planning a vehicle driving trajectory in various scenarios such as strong interaction scenarios and long-tail interaction scenarios. The subject-matter of the present invention is defined by the features of the independent claims. Further preferred embodiments of the present invention are defined in the dependent claims.

In a first aspect, there is provided a method for determining a vehicle driving trajectory, including:
sequentially simulating, based on an interaction scenario of a vehicle at a current moment by using forward driving of the vehicle as a constraint condition, an interaction scenario of the vehicle at each of a plurality of future moments, to form a scenario tree consisting of the interaction scenarios at the current moment and the future moments, the interaction scenario comprises an interaction intention of each environmental entity in an environment where the vehicle is located, and the environmental entity comprises at least the vehicle and other traffic agents;
obtaining a scenario value of each interaction intention in the interaction scenario at each moment in the scenario tree, the scenario value being capable of representing a matching degree between the interaction intention and a human driving intention;
obtaining an optimal interaction intention of the vehicle in the interaction scenario at each moment based on the scenario value; and
determining a driving trajectory of the vehicle based on the optimal interaction intention,
the obtaining an optimal interaction intention of the vehicle in the interaction scenario at each moment based on the scenario value includes: obtaining an interaction intention having a maximum scenario value of the vehicle in the interaction scenario at each moment, and using the interaction intention having the maximum scenario value as the optimal interaction intention.

In a technical solution of the above method for determining a vehicle driving trajectory, the sequentially simulating, based on an interaction scenario of a vehicle at a current moment by using forward driving of the vehicle as a constraint condition, an interaction scenario of the vehicle at each of a plurality of future moments includes:
sequentially simulating, by using the interaction intention in the interaction scenario at the current moment as a starting point of deduction, an interaction intention of the vehicle and a probability thereof when the vehicle drives forward to each of the future moments; simulating an interaction intention of another environmental entity and a probability thereof at each of the future moments based on the interaction intention of the vehicle and the probability thereof at each of the future moments; and
obtaining the interaction scenario at each of the future moments based on the interaction intention of the vehicle and the probability thereof and the interaction intention of the another environmental entity and the probability thereof at each of the future moments.

In a technical solution of the above method for determining a vehicle driving trajectory, the sequentially simulating an interaction intention of the vehicle and a probability thereof when the vehicle drives forward to each of the future moments includes:
simulating all interaction intentions of the vehicle and probabilities thereof when the vehicle drives forward to each of the plurality of future moments; and
searching for a plurality of interaction intentions and probabilities thereof from all the interaction intentions by using a preset first search algorithm, so as to be used as preferred interaction intentions of the vehicle and probabilities thereof at the future moment.

In a technical solution of the above method for determining a vehicle driving trajectory, the simulating an interaction intention of another environmental entity and a probability thereof at each of the future moments includes: simulating the interaction intention of the another environmental entity and the probability thereof at each of the future moments based on the preferred interaction intentions of the vehicle and the probabilities thereof at each of the future moments; and
the obtaining the interaction scenario at each of the future moments includes: obtaining the interaction scenario at each of the future moments based on the preferred interaction intentions of the vehicle and the probabilities thereof and the interaction intention of the another environmental entity and the probability thereof at each of the future moments.

In a technical solution of the above method for determining a vehicle driving trajectory, the obtaining a scenario value of each interaction intention in the interaction scenario at each moment in the scenario tree includes:
obtaining the scenario value of each interaction intention in the interaction scenario at each moment in the scenario tree by using a reinforcement learning model that is obtained by training based on first human driving behavior data,
wherein the first human driving behavior data is marked with a human driving intention.

In a technical solution of the above method for determining a vehicle driving trajectory, the determining a driving trajectory of the vehicle based on the optimal interaction intention includes:
obtaining a driving trajectory of the vehicle at each moment based on the optimal interaction intention of the vehicle in the interaction scenario at each moment; and
obtaining driving trajectories of the vehicle within time periods formed from the current moment to the plurality of future moments based on the driving trajectory of the vehicle at each moment.

In a technical solution of the above method for determining a vehicle driving trajectory, the interaction scenario of the vehicle at the current moment is obtained in the following manner:
obtaining, based on a topological relationship of a road in an environment where the vehicle is located at the current moment, a topological relationship of each environmental entity in the environment;
obtaining an interaction intention of each environmental entity based on the topological relationship of the environmental entity;
obtaining a probability of the interaction intention of each environmental entity based on road features of the road and entity features of the environmental entity in the environment; and
obtaining the interaction scenario at the current moment based on the interaction intention of each environmental entity and the probability thereof.

In a technical solution of the above method for determining a vehicle driving trajectory, the obtaining a probability of the interaction intention of each environmental entity includes:
obtaining the probability of the interaction intention of each environmental entity in the environment based on the road features of the road and the entity features of the environmental entity in the environment by using an interaction intention recognition model that is obtained by training based on second human driving behavior data,
wherein the second human driving behavior data is marked with a human driving intention.

In a second aspect, there is provided a computer device. The computer device includes a processor and a storage apparatus adapted to store a plurality of pieces of program code, where the program code is adapted to be loaded and run by the processor to perform the method in any one of the technical solutions of the above method for determining a vehicle driving trajectory.

In a third aspect, there is provided a computer-readable storage medium. The computer-readable storage medium stores a plurality of pieces of program code, where the program code is adapted to be loaded and run by a processor to perform the method in any one of the technical solutions of the above method for determining a vehicle driving trajectory.

In a fourth aspect, there is provided a vehicle including the computer device in the technical solution of the above computer device.

The above one or more technical solutions of the invention have at least one or more of the following beneficial effects:
In the technical solutions implementing the method for determining a vehicle driving trajectory provided in the invention, the interaction scenario of the vehicle at each of the plurality of future moments may be sequentially deduced based on the interaction scenario of the vehicle at the current moment by using forward driving of the vehicle as the constraint condition, to form the scenario tree consisting of the interaction scenarios at the current moment and the future moments, where the interaction scenario may include the interaction intention of each environmental entity in the environment where the vehicle is located, and the environmental entity includes at least the vehicle and other traffic agents. After the scenario tree is formed, the scenario value of each interaction intention in the interaction scenario at each moment in the scenario tree may be obtained, the scenario value being capable of representing a matching degree between the interaction intention and a human driving intention. Further, the optimal interaction intention of the vehicle in the interaction scenario at each moment in the scenario tree is obtained based on the scenario value, and the driving trajectory of the vehicle is determined based on the optimal interaction intention. According to the above method, the optimal interaction intention that better matches the human driving intention can be obtained whether in non-strong interaction scenarios, strong interaction scenarios, or long-tail interaction scenarios, such that these optimal interaction intentions are more consistent with correct driving habits of humans formed under the premise of meeting the vehicle driving safety and reliability, so that the safety and reliability of the vehicle can be ensured when the vehicle is controlled to drive autonomously according to the driving trajectory determined based on these optimal interaction intentions.

### Brief Description of the Drawings

The disclosed content of the invention will become more readily understood with reference to the accompanying drawings. Those skilled in the art readily understand that these accompanying drawings are merely for illustrative purposes and are not intended to limit the scope of protection of the invention. In the drawings:
FIG. 1 is a schematic flowchart of main steps of a method for determining a vehicle driving trajectory according to an embodiment of the invention;
FIG. 2 is a schematic diagram of a scenario tree according to an embodiment of the invention;
FIG. 3 is a schematic flowchart of main steps of a method for simulating an interaction scenario of a vehicle at each of a plurality of future moments according to an embodiment of the invention;
FIG. 4 is a schematic diagram of driving of an ego vehicle and another vehicle according to an embodiment of the invention;
FIG. 5 is a schematic diagram of interaction intentions of an ego vehicle and another vehicle at each of five moments according to an embodiment of the invention;
FIG. 6 is a schematic flowchart of main steps of a method for obtaining an interaction scenario at a current moment according to an embodiment of the invention; and
FIG. 7 is a schematic diagram of a main structure of a computer device according to an embodiment of the invention.

### Detailed Description of Embodiments

Some implementations of the invention are described below with reference to the accompanying drawings. Those skilled in the art should understand that these implementations are only used to explain the technical principles of the invention, and are not intended to limit the scope of protection of the invention.

In the description of the invention, "processor" may include hardware, software or a combination of both. The processor may be a central processing unit, a microprocessor, a graphics processing unit, a digital signal processor, or any other suitable processor. The processor has a data and/or signal processing function. The processor may be implemented in software, hardware, or a combination thereof. A computer-readable storage medium includes any suitable medium that can store program code, such as a magnetic disk, a hard disk, an optical disc, a flash memory, a read-only memory, or a random access memory.

Related user personal information that may be involved in the embodiments of the invention is processed strictly in accordance with the requirements of laws and regulations, following the principles of legality, legitimacy, and necessity, and based on reasonable purposes of service scenarios, and is personal information actively provided a user during the use of a product/service or generated due to the use of the product/service and obtained after user authorization.

The user personal information processed in the invention may vary depending on specific product/service scenarios, should be based on a specific scenario in which the user uses the product/service, and may be related to account information of the user, device information, driving information, vehicle information, or other related information. The invention will treat the user personal information and processing thereof with a high degree of diligence.

The invention attaches great importance to the security of user personal information, and has adopted reasonable and feasible security protection measures that comply with industry standards to protect user information and prevent personal information from unauthorized access, public disclosure, use, modification, damage or loss.

Embodiments of a method for determining a vehicle driving trajectory are described below.

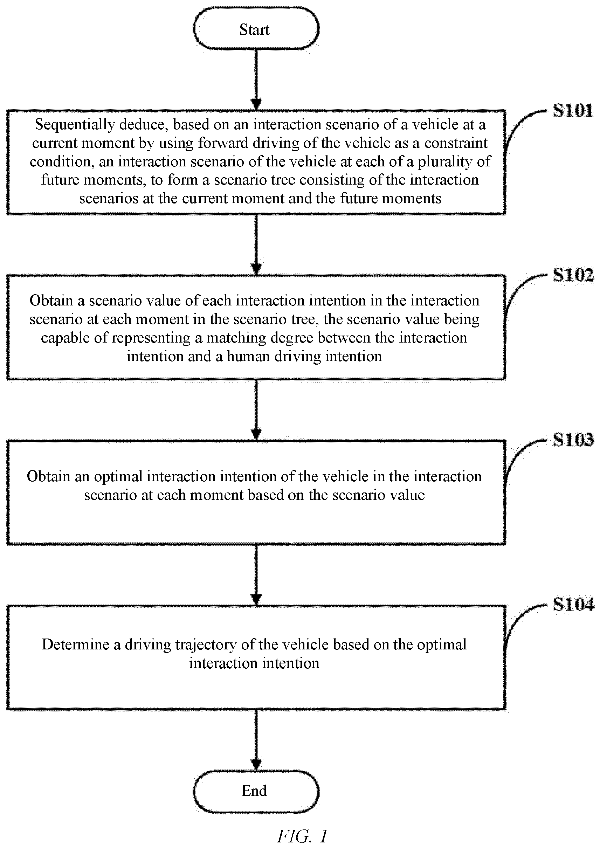

Referring to FIG. 1, FIG. 1 is a schematic flowchart of main steps of a method for determining a vehicle driving trajectory according to an embodiment of the invention. As shown in FIG. 1, the method for determining a vehicle driving trajectory in this embodiment of the invention mainly includes the following steps S101 to S104.

Step S 101: Sequentially deduce, based on an interaction scenario of a vehicle at a current moment by using forward driving of the vehicle as a constraint condition, an interaction scenario of the vehicle at each of a plurality of future moments, to form a scenario tree consisting of the interaction scenarios at the current moment and the future moments.

The interaction scenario may include an interaction intention of each environmental entity in an environment where the vehicle is located, the environmental entity includes at least the vehicle and other traffic agents, and the traffic agents include, but are not limited to, a vehicle, a pedestrian, a static obstacle, etc.

An interaction intention of an environmental entity is an intention of the environmental entity to produce specific interaction behavior towards other environmental entities. For example, the vehicle and an obstacle A are used as an example, in which an interaction intention of the vehicle may be bypassing the obstacle A.

The scenario tree is of a tree structure. The interaction scenario at the current moment is the first layer or the lowest layer of tree structure in the scenario tree. An interaction scenario at the first future moment is the second layer of tree structure. An interaction scenario at the second future moment is the third layer of tree structure, and so on for interaction scenarios at the other future moments.

In this step, performing the deduction by using the forward driving of the vehicle as the constraint condition takes into account an impact of the vehicle driving forward according to a specific interaction intention at the current moment on interaction intentions of other traffic agents at a next moment, and the interaction intentions of the other traffic agents at the next moment may further affect an interaction intention of the vehicle at a next moment. Based on this, the interaction intentions of the vehicle and the other traffic agents at each future moment can be sequentially deduced.

Step S102: Obtain a scenario value of each interaction intention in the interaction scenario at each moment in the scenario tree, the scenario value being capable of representing a matching degree between the interaction intention and a human driving intention.

The human driving intention is an intention of producing specific interaction behavior towards other traffic agents by a human when the human drives the vehicle under the premise of ensuring the driving safety and reliability of the vehicle. In other words, such an intention is autonomously decided by the human.

There may be a positive correlation between the scenario value and the matching degree. In other words, the greater the scenario value, the higher the matching degree between the interaction intention and the human driving intention, and vice versa. In addition, a greater scenario value also indicates that the driving safety and reliability of the vehicle can be better ensured when the vehicle drives according to the interaction intention corresponding to the scenario value.

In some implementations, the scenario value of each interaction intention in the interaction scenario at each moment in the scenario tree may be obtained by using a reinforcement learning model that is obtained by training based on first human driving behavior data, where the first human driving behavior data is marked with a human driving intention.

Specifically, the first human driving behavior data may be used to perform supervised training on the reinforcement learning model, such that the trained reinforcement learning model can use a value of a reinforcement learning value function thereof to accurately evaluate the matching degree between the interaction intention and the human driving intention. In addition, the scenario value of the interaction intention may be obtained based on the value of the reinforcement learning value function.

Step S103: Obtain an optimal interaction intention of the vehicle in the interaction scenario at each moment based on the scenario value.

The greater the scenario value, the higher the matching degree between the interaction intention and the human driving intention. Therefore, an interaction intention having a greater scenario value may be selected as the optimal interaction intention. In some implementations, an interaction intention having a maximum scenario value of the vehicle in the interaction scenario at each moment may be obtained, and the interaction intention having the maximum scenario value may be used as the optimal interaction intention.

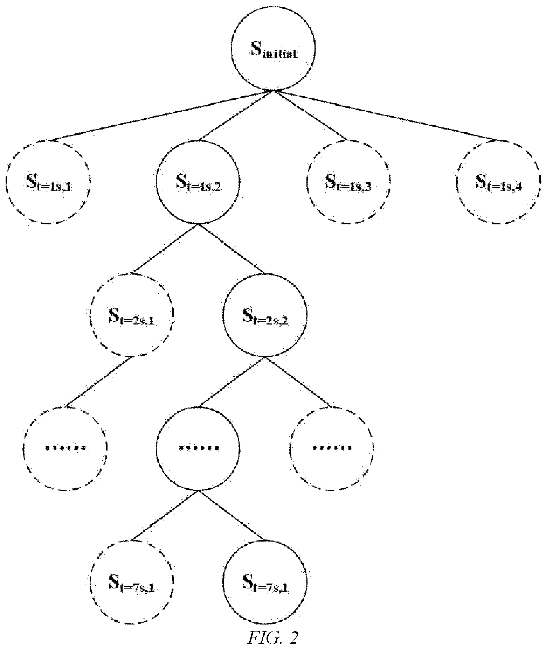

Referring to FIG. 2, FIG. 2 exemplarily shows a scenario tree, in which Sᵢₙᵢₜᵢₐₗ represents the interaction scenario at the current moment. S_{t=1s,1}, S_{t=1s,2}, S_{t=1s,2}, and S_{t=1s,2} represent the four interaction intentions in the interaction scenario at the first future moment, respectively. In the four interaction intentions, S_{t=1s,2} has the greatest scenario value. S_{t=2s,1} and S_{t=2s,2} represent the two interaction intentions in the interaction scenario at the second future moment. In the two interaction intentions, S_{t=2s,2} has the greatest scenario value. By analogy, the interaction intentions having the greatest scenario value at the seven future moments can be obtained, that is, the interaction intentions shown by the solid circles in FIG. 2.

Step S104: Determine a driving trajectory of the vehicle based on the optimal interaction intention.

After the optimal interaction intention at each moment is obtained, a trajectory of the vehicle formed when the vehicle drives according to a corresponding optimal interaction intention at each moment can be determined, and the driving trajectory of the vehicle can be obtained based on these trajectories. In some implementations, the driving trajectory of the vehicle at each moment may be obtained based on the optimal interaction intention of the vehicle in the interaction scenario at each moment in the scenario tree, and then the driving trajectories of the vehicle within time periods formed from the current moment to the plurality of future moments are obtained based on the driving trajectory of the vehicle at each moment in the scenario tree. In the above manner, the driving trajectories of the vehicle within the time periods formed from the current moment to the plurality of future moments can be accurately obtained.

According to the method described in steps S101 to S104, the optimal interaction intention of the vehicle that better matches the human driving intention at each moment can be obtained whether in non-strong interaction scenarios, strong interaction scenarios, or long-tail interaction scenarios, so that the safety and reliability of the vehicle when the vehicle drives autonomously according to these interaction intentions can be effectively ensured.

Step S101 is further described below.

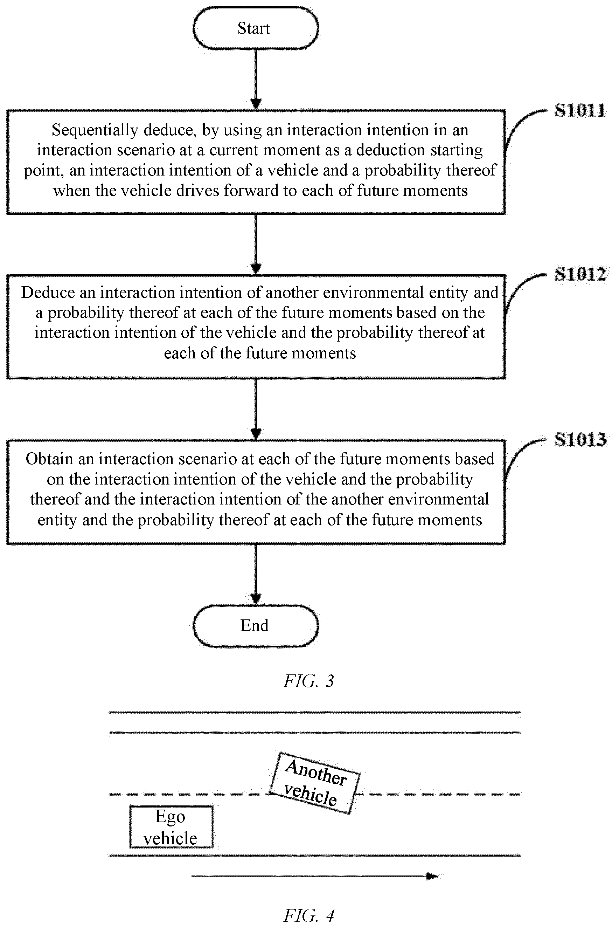

In some implementations of step S101, the interaction scenario of the vehicle at each of the future moments can be sequentially deduced through the following steps S1011 to S1013 shown in FIG. 3.

Step S 1011: Sequentially deduce, by using the interaction intention in the interaction scenario at the current moment as a starting point of deduction, an interaction intention of the vehicle and a probability thereof when the vehicle drives forward to each of the future moments.

The interaction scenario at the current moment not only includes the interaction intention of the vehicle and the probability thereof, but also includes interaction intentions of other traffic agents and probabilities thereof. The first future moment is used as an example. The interaction intention of the vehicle and the probability thereof at the first future moment when the vehicle drives to the first future moment according to the interaction intention of the vehicle and the probability thereof at the current moment is deduced in combination with the interaction intentions of the other traffic agents and the probabilities thereof at the current moment.

Step S 1012: Deduce an interaction intention of another environmental entity and a probability thereof at each of the future moments based on the interaction intention of the vehicle and the probability thereof at each of the future moments.

The first future moment is still used as an example. An interaction intention of another environmental entity at the first future moment may change due to an impact of the interaction intention of the vehicle and the probability thereof at the first future moment. For example, if the interaction intention of the vehicle at the first future moment is yielding to an environmental entity 1, an interaction intention of the environmental entity 1 may be cutting into a lane in front of the vehicle. If the interaction intention of the vehicle at the first future moment is not yielding to the environmental entity 1, the interaction intention of the environmental entity 1 may be not cutting into the lane in front of the vehicle.

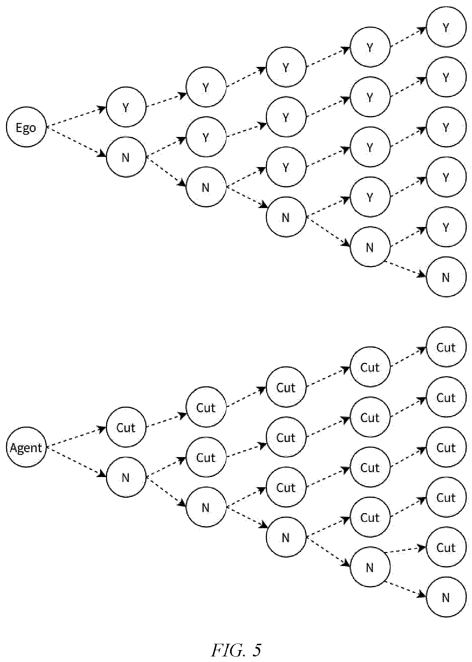

The above deduction process is described briefly below with reference to FIG. 4 and FIG. 5.

As shown in FIG. 4, in a traffic scenario, an ego vehicle and another vehicle are driving in separate lanes. It is detected from a specific moment that the another vehicle wants to cut into the lane in front of the ego vehicle. FIG. 5 shows scenario trees respectively formed by interaction intentions of the ego vehicle Ego and the another vehicle Agent at the 1^{st} to 5^{th} moments. In the scenario tree of the ego vehicle Ego, Y and N represent yielding to and not yielding to the another vehicle Agent, respectively. In the scenario tree of the another vehicle Agent, Cut and N represent cutting into and not cutting into the lane in front of the ego vehicle Ego, respectively.

The first moment is used as an example. Interaction intentions of the ego vehicle Ego include yielding to the another vehicle Agent (Y) and not yielding to the another vehicle Agent (N). Under this impact, interaction intentions of the another vehicle Agent include cutting into the lane in front of the ego vehicle Ego (Cut) and not cutting into the lane in front of the ego vehicle Ego (N). Probabilities of the four interaction intentions are not shown in FIG. 5. The four interaction intentions and probabilities thereof form the interaction scenario of the environment where the ego vehicle Ego is located at the first moment.

Continue to refer to the second moment. In the scenario tree of the ego vehicle Ego, the branch of interaction intention of yielding to the another vehicle Agent (Y) at the first moment is still yielding to the another vehicle Agent (Y) at the second moment. The branch of interaction intention of not yielding to the another vehicle Agent (N) at the first moment includes two interaction intentions at the second moment: yielding to the another vehicle Agent (Y) and not yielding to the another vehicle Agent (N). Under the impact of the interaction intention of the ego vehicle Ego at the second moment, there are three branches of interaction intention for the another vehicle Agent at the second moment: cutting into the lane in front of the ego vehicle Ego (Cut), cutting into the lane in front of the ego vehicle Ego (Cut), and not cutting into the lane in front of the ego vehicle Ego (N). The six interaction intentions and probabilities thereof form the interaction scenario of the environment where the ego vehicle Ego is located at the second moment.

Cases for the 3^{rd} to 5^{th} moments can be deduced in the same manner and will not be repeated here.

Step S1013: Obtain the interaction scenario at each of the future moments based on the interaction intention of the vehicle and the probability thereof and the interaction intention of the another environmental entity and the probability thereof at each of the future moments. One future moment is used as an example. An interaction intention distribution of all interaction intentions (all the interaction intentions include the interaction intention of the vehicle and the interaction intention of the another environmental entity) at this moment may be obtained based on the interaction intention of the vehicle and the probability thereof and the interaction intention of the another environmental entity and the probability thereof at this moment, and the interaction intention distribution may be further used as the interaction scenario at this moment.

According to the method described in steps S1011 to S1013, the interaction intentions of the vehicle and the other traffic agents at each of the future moments can be accurately deduced by using the forward driving of the vehicle as the constraint condition, thereby ensuring the accuracy of determining the vehicle driving trajectory based on the interaction intentions.

Steps S1011 to S1013 are further described below.

In some implementations of step S1011, all interaction intentions of the vehicle and probabilities thereof when the vehicle drives forward to each of the plurality of future moments can be deduced, and a plurality of interaction intentions and probabilities thereof may be further searched for from all the interaction intentions by using a preset first search algorithm, so as to be used as preferred interaction intentions of the vehicle and probabilities thereof at the future moment. In complex traffic scenarios, there may be a relatively large number of environmental entities and a relatively complex road topology. After the interaction scenario deduction is performed according to the method described in steps S1011 to S1013, the interaction scenario at each moment may include a large number of interaction intentions that are complex, which makes the structure of the scenario tree built based on these interaction scenarios more complex, which is not conducive to quickly obtaining the optimal interaction intention at each moment from the scenario tree to determine the driving trajectory of the vehicle. In this regard, a preset preferred search algorithm may be used in this implementation to search for some preferred interaction intentions. In this way, the interaction intention of the another environmental entity and the probability thereof at each of the future moments may be deduced based on the preferred interaction intention of the vehicle and the probability thereof at each of the future moments when step S 1012 is performed. The interaction scenario at each of the future moments is obtained based on the preferred interaction intention of the vehicle and the probability thereof and the interaction intention of the another environmental entity and the probability thereof at each of the future moments when step S1013 is performed.

In this implementation, the preferred interaction intentions may be obtained by using a conventional preferred search algorithm. For example, in some implementations, a depth first search (DFS) algorithm may be used for searching.

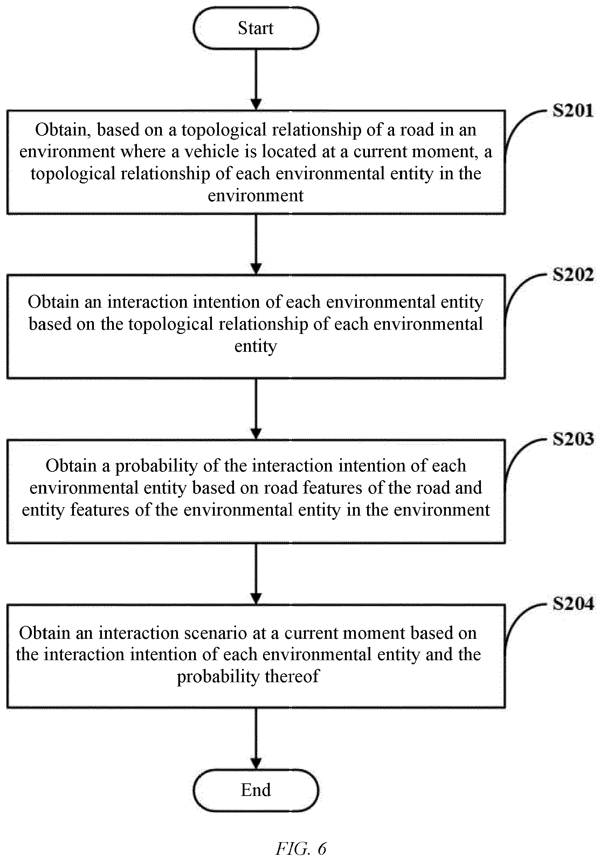

In some implementations of step S1011, the interaction scenario of the vehicle at the current moment can be obtained through the following steps S201 to S204 shown in FIG. 6.

Step S201: Obtain, based on a topological relationship of a road in an environment where the vehicle is located at the current moment, a topological relationship of each environmental entity in the environment.

The topological relationship of the road refers to a topological structure of the road.

The topological relationship of the environmental entity may be a topological structure of a road where the environmental entity is located. Alternatively, the topological relationship of the environmental entity may be described by using a possible traffic behavior in the topological structure of the road where the environmental entity is located. For example, the topological relationship of the environmental entity may include single-lane topology, merged topology, lane-changing topology, crossing topology, etc. The single-lane topology refers to a topological structure where the road on which the environmental entity is located is a single lane, and a possible traffic behavior of the environmental entity under this topological structure is single-lane driving. The merged topology refers to a topological structure where the road on which the environmental entity is located is a plurality of lanes merging into a single lane, and a possible traffic behavior of the environmental entity under this topological structure is merging into the same single lane with environmental entities in other lanes. The lane-changing topology and the crossing topology are not described in detail.

Step S202: Obtain an interaction intention of each environmental entity based on the topological relationship of the environmental entity.

Possible traffic behaviors of environmental entities may be different depending on different topological relationships thereof. When performing respective traffic behaviors, different environmental entities may interact with other environmental entities, so that the interaction intentions of the environmental entities can be determined. The merged topology is used as an example. A possible traffic behavior of the environmental entity under this topological structure is merging into the same single lane with environmental entities in other lanes, and in this process, the environmental entity may cut into a lane where other vehicles are driving forward, and the behavior of cutting into the lane where other vehicles are driving forward is an interaction intention.

Step S203: Obtain a probability of the interaction intention of each environmental entity based on road features of the road and entity features of the environmental entity in the environment.

The higher the probability of the interaction intention, the higher the matching degree between the interaction intention and the human driving intention. The human driving intention is an intention of producing specific interaction behavior towards other traffic agents by a human when the human drives the vehicle under the premise of ensuring the driving safety and reliability of the vehicle. In other words, such an intention is autonomously decided by the human.

In some implementations, the probability of the interaction intention of each environmental entity in the environment may be obtained based on the road features of the road and the entity features of the environmental entity in the environment by using an interaction intention recognition model that is obtained by training based on second human driving behavior data, where the second human driving behavior data is marked with a human driving intention. Specifically, the second human face driving behavior data may be used to perform supervised training on the interaction intention recognition model, such that the trained interaction intention recognition model can use the road features and the entity features to accurately obtain the probability of the interaction intention, where the probability may be used for representing a matching degree between the interaction intention and a human driving intention.

Step S204: Obtain the interaction scenario at the current moment based on the interaction intention of each environmental entity and the probability thereof. In this step, an interaction intention distribution of all interaction intentions at the current moment may be obtained based on the interaction intention of each environmental entity and the probability thereof, and the interaction intention distribution may be further used as the interaction scenario at the current moment.

According to the method described in steps S201 to S204, an accurate interaction scenario may be obtained by comprehensively considering the topological structure of the road, road features, and entity features of the environmental entity.

Those skilled in the art can understand that all or some of the procedures in the method of the above embodiment of the invention may also be implemented by a computer program instructing relevant hardware. The computer program may be stored in a computer-readable storage medium, and when the computer program is executed by a processor, the steps of the above method embodiments may be implemented. The computer program includes computer program codes, which may be in a source code form, an object code form, an executable file form, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the invention further provides a computer device.

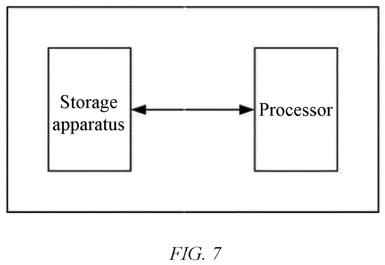

Referring to FIG. 7, FIG. 7 is a schematic diagram of a main structure of a computer device according to an embodiment of the invention. As shown in FIG. 7, the computer device in this embodiment of the invention mainly includes a storage apparatus and a processor. The storage apparatus may be configured to store a program for performing the method for determining a vehicle driving trajectory of the above method embodiments. The processor may be configured to execute the program in the storage apparatus, where the program includes but is not limited to a program for performing the method for determining a vehicle driving trajectory of the above method embodiments. For ease of description, only parts related to the embodiments of the invention are shown. For specific technical details that are not disclosed, reference may be made to the method part of the embodiments of the invention.

In the embodiments of the invention, the computer device may be a control device formed by various electronic devices. In some possible implementations, the computer device may include a plurality of storage apparatuses and a plurality of processors. The program for performing the method for determining a vehicle driving trajectory of the above method embodiments may be divided into a plurality of sections of subprogram, and each section of subprogram may be loaded and run by the processor to perform different steps of the method for determining a vehicle driving trajectory of the above method embodiments. Specifically, each section of subprogram may be stored in a different storage apparatus, and each processor may be configured to execute programs in one or more storage apparatuses to jointly implement the method for determining a vehicle driving trajectory of the above method embodiments. In other words, each processor performs different steps of the method for determining a vehicle driving trajectory of the above method embodiments, to jointly implement the method for determining a vehicle driving trajectory of the above method embodiments.

The plurality of processors may be processors deployed on a same device. For example, the computer device may be a high-performance device composed of a plurality of processors, and the plurality of processors may be processors configured on the high-performance device. In addition, the plurality of processors may alternatively be processors deployed on different devices. For example, the above computer device may be a server cluster, and the plurality of processors may be processors on different servers in the server cluster.

Further, the invention further provides a computer-readable storage medium.

In an embodiment of a computer-readable storage medium according to the invention, the computer-readable storage medium may be configured to store a program for performing the method for determining a vehicle driving trajectory of the above method embodiments, and the program may be loaded and run by a processor to implement the above method for determining a vehicle driving trajectory. For ease of description, only parts related to the embodiments of the invention are shown. For specific technical details that are not disclosed, reference may be made to the method part of the embodiments of the invention. The computer-readable storage medium may be a storage apparatus formed by various electronic devices. Optionally, the computer-readable storage medium in the embodiment of the invention is a non-transitory computer-readable storage medium.

Further, the invention further provides a vehicle.

In an embodiment of the vehicle according to the invention, the vehicle may include the computer device described in the above embodiment of the computer device. In this embodiment, the vehicle may be an autonomous driving vehicle, an unmanned vehicle, or the like. In addition, according to types of power sources, the vehicle in this embodiment can be a fuel vehicle, an electric vehicle, a hybrid vehicle in which electric energy is mixed with fuel, or a vehicle using other new energy sources.

## Claims

1. A method for determining a vehicle driving trajectory, comprising:
sequentially simulating, based on an interaction scenario of a vehicle at a current moment by using forward driving of the vehicle as a constraint condition, an interaction scenario of the vehicle at each of a plurality of future moments, to form a scenario tree consisting of the interaction scenarios at the current moment and the future moments (S101), wherein the interaction scenario comprises an interaction intention of each environmental entity in an environment where the vehicle is located, and the environmental entity comprises at least the vehicle and other traffic agents; **characterized in that**, the method further comprises:
obtaining a scenario value of each interaction intention in the interaction scenario at each moment in the scenario tree, the scenario value representing a matching degree between the interaction intention and a human driving intention (S102);
obtaining an optimal interaction intention of the vehicle in the interaction scenario at each moment based on the scenario value (S103); and
determining a driving trajectory of the vehicle based on the optimal interaction intention(S104),
wherein the obtaining an optimal interaction intention of the vehicle in the interaction scenario at each moment based on the scenario value (S103) comprises:
obtaining an interaction intention having a maximum scenario value of the vehicle in the interaction scenario at each moment, and using the interaction intention having the maximum scenario value as the optimal interaction intention.

2. The method according to claim 1, wherein the sequentially simulating, based on an interaction scenario of a vehicle at a current moment by using forward driving of the vehicle as a constraint condition, an interaction scenario of the vehicle at each of a plurality of future moments comprises:
sequentially simulating, by using the interaction intention in the interaction scenario at the current moment as a starting point of deduction, an interaction intention of the vehicle and a probability thereof when the vehicle drives forward to each of the future moments;
simulating an interaction intention of another environmental entity and a probability thereof at each of the future moments based on the interaction intention of the vehicle and the probability thereof at each of the future moments; and
obtaining the interaction scenario at each of the future moments based on the interaction intention of the vehicle and the probability thereof and the interaction intention of the another environmental entity and the probability thereof at each of the future moments.

3. The method according to claim 1 or 2, wherein the sequentially simulating an interaction intention of the vehicle and a probability thereof when the vehicle drives forward to each of the future moments comprises:
simulating all interaction intentions of the vehicle and probabilities thereof when the vehicle drives forward to each of the plurality of future moments; and
searching for a plurality of interaction intentions and probabilities thereof from all the interaction intentions by a predetermined first search algorithm, as preferred interaction intentions of the vehicle and probabilities thereof at the future moment.

4. The method according to claim 3, wherein
the simulating an interaction intention of another environmental entity and a probability thereof at each of the future moments comprises: simulating the interaction intention of the another environmental entity and the probability thereof at each of the future moments based on the preferred interaction intentions of the vehicle and the probabilities thereof at each of the future moments; and
the obtaining the interaction scenario at each of the future moments comprises: obtaining the interaction scenario at each of the future moments based on the preferred interaction intentions of the vehicle and the probabilities thereof and the interaction intention of the another environmental entity and the probability thereof at each of the future moments.

5. The method according to any one of claims 1 to 4, wherein the obtaining a scenario value of each interaction intention in the interaction scenario at each moment in the scenario tree comprises:
obtaining the scenario value of each interaction intention in the interaction scenario at each moment in the scenario tree using a reinforcement learning model trained based on first human driving behavior data,
wherein the first human driving behavior data is labeled with a human driving intention.

6. The method according to any one of claims 1 to 5, wherein the determining a driving trajectory of the vehicle based on the optimal interaction intention comprises:
obtaining the driving trajectory of the vehicle at each moment based on the optimal interaction intention of the vehicle in the interaction scenario at each moment; and
obtaining driving trajectories of the vehicle within time periods from the current moment to the plurality of future moments based on the driving trajectory of the vehicle at each moment.

7. The method according to any one of claims 1 to 6, wherein the interaction scenario of the vehicle at the current moment is obtained in the following manner:
obtaining, based on a topological relationship of a road in the environment where the vehicle is located at the current moment, a topological relationship of each environmental entity in the environment(S201);
obtaining an interaction intention of each environmental entity based on the topological relationship of the environmental entity(S202);
obtaining a probability of the interaction intention of each environmental entity based on road features of the road and entity features of the environmental entity in the environment(S203); and
obtaining the interaction scenario at the current moment based on the interaction intention of each environmental entity and the probability thereof(S204).

8. The method according to claim 7, wherein the obtaining a probability of the interaction intention of each environmental entity comprises:
obtaining the probability of the interaction intention of each environmental entity in the environment based on the road features of the road and the entity features of the environmental entity in the environment using an interaction intention recognition model trained based on second human driving behavior data,
wherein the second human driving behavior data is labeled with a human driving intention.

9. A computer device, comprising a processor and a storage apparatus configured to store a plurality of pieces of program code, wherein the program code is adapted to be loaded and executed by the processor to perform a method for determining a vehicle driving trajectory according to any one of claims 1 to 8.

10. A non-transitory computer-readable storage medium storing a plurality of pieces of program code, wherein the program code is adapted to be loaded and executed by a processor to perform a method for determining a vehicle driving trajectory according to any one of claims 1 to 8.

11. A vehicle, comprising a computer device according to claim 9.

## Patentansprüche

1. Verfahren zum Bestimmen einer Fahrzeugfahrtrajektorie, umfassend:
sequenzielles Simulieren, auf der Grundlage eines Interaktionsszenariums eines Fahrzeugs zu einem aktuellen Zeitpunkt unter Verwendung von Vorwärtsfahren des Fahrzeugs als eine Zwangsbedingung, eines Interaktionsszenariums des Fahrzeugs an jedem von einer Vielzahl von zukünftigen Zeitpunkten, um einen Szenariumsbaum zu bilden, der aus den Interaktionsszenarien zu dem aktuellen Zeitpunkt und den zukünftigen Zeitpunkten besteht (S101), wobei das Interaktionsszenarium eine Interaktionsabsicht von jeder Umfeldentität in einem Umfeld, in dem sich das Fahrzeug befindet, umfasst, und wobei die Umfeldentität mindestens das Fahrzeug und andere Verkehrsteilnehmer umfasst;
**dadurch gekennzeichnet, dass** das Verfahren ferner umfasst:
Erhalten eines Szenariumswerts von jeder Interaktionsabsicht in dem Interaktionsszenarium zu jedem Zeitpunkt in dem Szenariumsbaum, wobei der Szenariumswert einen Übereinstimmungsgrad zwischen der Interaktionsabsicht und einer menschlichen Fahrabsicht repräsentiert (S102);
Erhalten einer optimalen Interaktionsabsicht des Fahrzeugs in dem Interaktionsszenarium zu jedem Zeitpunkt auf der Grundlage des Szenariumswerts (S103); und
Bestimmen einer Fahrtrajektorie des Fahrzeugs auf der Grundlage der optimalen Interaktionsabsicht (S104),
wobei das Erhalten einer optimalen Interaktionsabsicht des Fahrzeugs in dem Interaktionsszenarium zu jedem Zeitpunkt auf der Grundlage des Szenariumswerts (S103) Folgendes umfasst:
Erhalten einer Interaktionsabsicht, die einen maximalen Szenariumswert aufweist, des Fahrzeugs in dem Interaktionsszenarium zu jedem Zeitpunkt, und Verwenden der Interaktionsabsicht, die den maximalen Szenariumswert aufweist, als die optimale Interaktionsabsicht.

2. Verfahren nach Anspruch 1, wobei das sequenzielle Simulieren, auf der Grundlage eines Interaktionsszenariums eines Fahrzeugs zu einem aktuellen Zeitpunkt unter Verwendung von Vorwärtsfahren des Fahrzeugs als eine Zwangsbedingung, eines Interaktionsszenariums des Fahrzeugs an jedem von einer Vielzahl von zukünftigen Zeitpunkten Folgendes umfasst:
sequenzielles Simulieren, unter Verwendung der Interaktionsabsicht in dem Interaktionsszenarium zu dem aktuellen Zeitpunkt als einem Deduktionsstartpunkt, einer Interaktionsabsicht des Fahrzeugs und einer Wahrscheinlichkeit davon, wenn das Fahrzeug vorwärtsfährt, zu jedem der zukünftigen Zeitpunkte;
Simulieren einer Interaktionsabsicht von einer anderen Umfeldentität und einer Wahrscheinlichkeit davon, zu jedem der zukünftigen Zeitpunkte, auf der Grundlage der Interaktionsabsicht des Fahrzeugs und der Wahrscheinlichkeit davon zu jedem der zukünftigen Zeitpunkte; und
Erhalten des Interaktionsszenariums zu jedem der zukünftigen Zeitpunkte auf der Grundlage der Interaktionsabsicht des Fahrzeugs und der Wahrscheinlichkeit davon und der Interaktionsabsicht der anderen Umfeldentität und der Wahrscheinlichkeit davon zu jedem der zukünftigen Zeitpunkte.

3. Verfahren nach Anspruch 1 oder 2, wobei das sequenzielle Simulieren einer Interaktionsabsicht des Fahrzeugs und einer Wahrscheinlichkeit davon, wenn das Fahrzeug vorwärtsfährt, zu jedem der zukünftigen Zeitpunkte Folgendes umfasst:
Simulieren aller Interaktionsabsichten des Fahrzeugs und der Wahrscheinlichkeiten davon, wenn das Fahrzeug vorwärtsfährt, zu jedem aus der Vielzahl von zukünftigen Zeitpunkten; und
Suchen nach einer Vielzahl von Interaktionsabsichten und Wahrscheinlichkeiten davon unter allen der Interaktionsabsichten durch einen vorbestimmten ersten Suchalgorithmus, als bevorzugte Interaktionsabsichten des Fahrzeugs und Wahrscheinlichkeiten davon zu dem zukünftigen Zeitpunkt.

4. Verfahren nach Anspruch 3, wobei
das Simulieren einer Interaktionsabsicht einer anderen Umfeldentität und einer Wahrscheinlichkeit davon zu jedem der zukünftigen Zeitpunkte Folgendes umfasst:
Simulieren der Interaktionsabsicht der anderen Umfeldentität und der Wahrscheinlichkeit davon, zu jedem der zukünftigen Zeitpunkte, auf der Grundlage der bevorzugten Interaktionsabsichten des Fahrzeugs und der Wahrscheinlichkeiten davon zu jedem der zukünftigen Zeitpunkte; und
wobei das Erhalten des Interaktionsszenariums zu jedem der zukünftigen Zeitpunkte Folgendes umfasst:
Erhalten des Interaktionsszenariums zu jedem der zukünftigen Zeitpunkte auf der Grundlage der bevorzugten Interaktionsabsichten des Fahrzeugs und der Wahrscheinlichkeiten davon und der Interaktionsabsicht der anderen Umfeldentität und der Wahrscheinlichkeit davon zu jedem der zukünftigen Zeitpunkte.

5. Verfahren nach einem der Ansprüche 1 bis 4, wobei das Erhalten eines Szenariumswerts von jeder Interaktionsabsicht in dem Interaktionsszenarium zu jedem Zeitpunkt in dem Szenariumsbaum Folgendes umfasst:
Erhalten des Szenariumswerts von jeder Interaktionsabsicht in dem Interaktionsszenarium zu jedem Zeitpunkt in dem Szenariumsbaum unter Verwendung eines Bestärkendes-Lernen-Modells, das auf der Grundlage von ersten Daten menschlichen Fahrverhaltens trainiert wird,
wobei die ersten Daten menschlichen Fahrverhaltens mit einer menschlichen Fahrabsicht gelabelt sind.

6. Verfahren nach einem der Ansprüche 1 bis 5, wobei das Bestimmen einer Fahrtrajektorie des Fahrzeugs auf der Grundlage der optimalen Interaktionsabsicht Folgendes umfasst:
Erhalten der Fahrtrajektorie des Fahrzeugs zu jedem Zeitpunkt auf der Grundlage der optimalen Interaktionsabsicht des Fahrzeugs in dem Interaktionsszenarium zu jedem Zeitpunkt; und
Erhalten von Fahrtrajektorien des Fahrzeugs innerhalb von Zeiträumen von dem aktuellen Zeitpunkt zu der Vielzahl von zukünftigen Zeitpunkten auf der Grundlage der Fahrtrajektorie des Fahrzeugs zu jedem Zeitpunkt.

7. Verfahren nach einem der Ansprüche 1 bis 6, wobei das Interaktionsszenarium des Fahrzeugs zu dem aktuellen Zeitpunkt auf die folgende Weise erhalten wird:
Erhalten, auf der Grundlage einer topologischen Beziehung einer Straße in dem Umfeld, in dem sich das Fahrzeug zu dem aktuellen Zeitpunkt befindet, einer topologischen Beziehung von jeder Umfeldentität in dem Umfeld (S201);
Erhalten einer Interaktionsabsicht von jeder Umfeldentität auf der Grundlage der topologischen Beziehung der Umfeldentität (S202);
Erhalten einer Wahrscheinlichkeit der Interaktionsabsicht von jeder Umfeldentität auf der Grundlage von Straßenmerkmalen der Straße und von Entitätsmerkmalen der Umfeldentität in dem Umfeld (S203); und
Erhalten des Interaktionsszenariums zu dem aktuellen Zeitpunkt auf der Grundlage der Interaktionsabsicht von jeder Umfeldentität und der Wahrscheinlichkeit davon (S204).

8. Verfahren nach Anspruch 7, wobei das Erhalten einer Wahrscheinlichkeit der Interaktionsabsicht von jeder der Umfeldentitäten Folgendes umfasst:
Erhalten der Wahrscheinlichkeit der Interaktionsabsicht von jeder Umfeldentität in dem Umfeld auf der Grundlage der Straßenmerkmale der Straße und der Entitätsmerkmale der Umfeldentität in dem Umfeld unter Verwendung eines Interaktionsabsichtserkennungsmodells, das auf der Grundlage von zweiten Daten menschlichen Fahrverhaltens trainiert wurde,
wobei die zweiten Daten menschlichen Fahrverhaltens mit einer menschlichen Fahrabsicht gelabelt sind.

9. Computervorrichtung, umfassend einen Prozessor und eine Speicherungseinrichtung, ausgelegt zum Speichern einer Vielzahl von Programmcodestücken, wobei der Programmcode dafür eingerichtet ist, durch den Prozessor geladen und ausgeführt zu werden, um ein Verfahren zum Bestimmen einer Fahrzeugfahrtrajektorie nach einem der Ansprüche 1 bis 8 durchzuführen.

10. Nicht-transitorisches, computerlesbares Speicherungsmedium, das eine Vielzahl von Programmcodestücken speichert, wobei der Programmcode dafür eingerichtet ist, durch einen Prozessor geladen und ausgeführt zu werden, um ein Verfahren zum Bestimmen einer Fahrzeugfahrtrajektorie nach einem der Ansprüche 1 bis 8 durchzuführen.

11. Fahrzeug, das eine Computervorrichtung nach Anspruch 9 umfasst.

## Revendications

1. Procédé de détermination de trajectoire de conduite de véhicule, comportant les étapes consistant à :
simuler séquentiellement, sur la base d'un scénario d'interaction d'un véhicule à un instant actuel en utilisant une conduite vers l'avant du véhicule en tant que condition de contrainte, un scénario d'interaction du véhicule à chacun d'une pluralité d'instants futurs, pour former un arbre de scénarios constitué des scénarios d'interaction à l'instant actuel et aux instants futurs (S101), le scénario d'interaction comportant une intention d'interaction de chaque entité environnementale dans un environnement où le véhicule est situé, et l'entité environnementale comportant au moins le véhicule et d'autres agents de circulation ;
**caractérisé en ce que** le procédé comporte en outre les étapes consistant à :
obtenir une valeur de scénario de chaque intention d'interaction dans le scénario d'interaction à chaque instant dans l'arbre de scénarios, la valeur de scénario représentant un degré de concordance entre l'intention d'interaction et une intention de conduite humaine (S102) ;
obtenir une intention d'interaction optimale du véhicule dans le scénario d'interaction à chaque instant d'après la valeur de scénario (S103) ; et
déterminer une trajectoire de conduite du véhicule d'après l'intention d'interaction optimale (S104), l'obtention d'une intention d'interaction optimale du véhicule dans le scénario d'interaction à chaque instant d'après la valeur de scénario (S103) comportant :
l'obtention d'une intention d'interaction présentant une valeur maximale de scénario du véhicule dans le scénario d'interaction à chaque instant, et l'utilisation de l'intention d'interaction présentant la valeur maximale de scénario en tant qu'intention d'interaction optimale.

2. Procédé selon la revendication 1, la simulation séquentielle, sur la base d'un scénario d'interaction d'un véhicule à un instant actuel en utilisant une conduite vers l'avant du véhicule en tant que condition de contrainte, d'un scénario d'interaction du véhicule à chacun d'une pluralité d'instants futurs comportant :
la simulation séquentielle, en utilisant l'intention d'interaction dans le scénario d'interaction à l'instant actuel comme point de départ de déduction, d'une intention d'interaction du véhicule et d'une probabilité de celle-ci lorsque le véhicule circule vers l'avant jusqu'à chacun des instants futurs ;
la simulation d'une intention d'interaction d'une autre entité environnementale et d'une probabilité de celle-ci à chacun des instants futurs d'après l'intention d'interaction du véhicule et sa probabilité à chacun des instants futurs ; et
l'obtention du scénario d'interaction à chacun des instants futurs d'après l'intention d'interaction du véhicule et sa probabilité et l'intention d'interaction de l'autre entité environnementale considérée et sa probabilité à chacun des instants futurs.

3. Procédé selon la revendication 1 ou 2, la simulation séquentielle d'une intention d'interaction du véhicule et d'une probabilité de celle-ci lorsque le véhicule circule vers l'avant jusqu'à chacun des instants futurs comportant :
la simulation de toutes les intentions d'interaction du véhicule et de leurs probabilités lorsque le véhicule circule vers l'avant jusqu'à chacun de la pluralité d'instants futurs ; et
la recherche d'une pluralité d'intentions d'interaction et de leurs probabilités parmi toutes les intentions d'interaction par un premier algorithme de recherche prédéterminé, en tant qu'intentions d'interaction préférées du véhicule et que probabilités de celles-ci à l'instant futur.

4. Procédé selon la revendication 3, la simulation d'une intention d'interaction d'une autre entité environnementale et d'une probabilité de celle-ci à chacun des instants futurs comportant :
la simulation de l'intention d'interaction de l'autre entité environnementale considérée et de sa probabilité à chacun des instants futurs d'après les intentions d'interaction préférées du véhicule et leurs probabilités à chacun des instants futurs ; et
l'obtention du scénario d'interaction à chacun des instants futurs comportant :
l'obtention du scénario d'interaction à chacun des instants futurs d'après les intentions d'interaction préférées du véhicule et leurs probabilités et l'intention d'interaction de l'autre entité environnementale considérée et sa probabilité à chacun des instants futurs.

5. Procédé selon l'une quelconque des revendications 1 à 4, l'obtention d'une valeur de scénario de chaque intention d'interaction dans le scénario d'interaction à chaque instant dans l'arbre de scénarios comportant :
l'obtention de la valeur de scénario de chaque intention d'interaction dans le scénario d'interaction à chaque instant dans l'arbre de scénarios à l'aide d'un modèle d'apprentissage par renforcement entraîné d'après des premières données de comportement de conduite humaine,
les premières données de comportement de conduite humaine étant étiquetées avec une intention de conduite humaine.

6. Procédé selon l'une quelconque des revendications 1 à 5, la détermination d'une trajectoire de conduite du véhicule d'après l'intention d'interaction optimale comportant :
l'obtention de la trajectoire de conduite du véhicule à chaque instant d'après l'intention d'interaction optimale du véhicule dans le scénario d'interaction à chaque instant ; et
l'obtention de trajectoires de conduite du véhicule au cours de périodes allant de l'instant actuel à la pluralité d'instants futurs d'après la trajectoire de conduite du véhicule à chaque instant.

7. Procédé selon l'une quelconque des revendications 1 à 6, le scénario d'interaction du véhicule à l'instant actuel étant obtenu de la manière suivante :
obtention, d'après une relation topologique d'une route dans l'environnement où le véhicule est situé à l'instant actuel, d'une relation topologique de chaque entité environnementale dans l'environnement (S201) ;
obtention d'une intention d'interaction de chaque entité environnementale d'après la relation topologique de l'entité environnementale (S202) ;
obtention d'une probabilité de l'intention d'interaction de chaque entité environnementale d'après des caractéristiques de route de la route et des caractéristiques d'entité de l'entité environnementale dans l'environnement(S203) ; et
obtention du scénario d'interaction à l'instant actuel d'après l'intention d'interaction de chaque entité environnementale et sa probabilité (S204).

8. Procédé selon la revendication 7, l'obtention d'une probabilité de l'intention d'interaction de chaque entité environnementale comportant :
l'obtention de la probabilité de l'intention d'interaction de chaque entité environnementale dans l'environnement d'après les caractéristiques de route de la route et les caractéristiques d'entité de l'entité environnementale dans l'environnement à l'aide d'un modèle de reconnaissance d'intentions d'interaction entraîné d'après des secondes données de comportement de conduite humaine,
les secondes données de comportement de conduite humaine étant étiquetées avec une intention de conduite humaine.

9. Dispositif informatique, comportant un processeur et un appareil de stockage configuré pour conserver une pluralité de fragments de code de programme, le code de programme étant prévu pour être chargé et exécuté par le processeur afin de réaliser un procédé de détermination de trajectoire de conduite de véhicule selon l'une quelconque des revendications 1 à 8.

10. Support de stockage non transitoire lisible par ordinateur conservant une pluralité de fragments de code de programme, le code de programme étant prévu pour être chargé et exécuté par un processeur afin de réaliser un procédé de détermination de trajectoire de conduite de véhicule selon l'une quelconque des revendications 1 à 8.

11. Véhicule comportant un dispositif informatique selon la revendication 9.
